# EUROPEAN PATENT SPECIFICATION

(11) **EP 2 938 904 B1**
(45) Date of publication and mention of the grant of the patent: **15.04.2020**
(21) Application number: 13826739.8
(22) Date of filing: 24.12.2013
(51) Int. Cl.: F16G 5/16

(54) **DRIVE BELT WITH A CARRIER RING AND TRANSVERSE SEGMENTS**
TREIBRIEMEN MIT TRAGRING UND TRANSVERSALSEGMENTEN
COURROIE D'ENTRAÎNEMENT POURVUE D'UN ANNEAU DE SUPPORT ET DE SEGMENTS TRANSVERSAUX

(30) Priority: 28.12.2012 NL 1039982
(43) Date of publication of application: 04.11.2015
(73) Proprietor: Robert Bosch GmbH, 70442 Stuttgart (DE)
(72) Inventor: FLEIG, Michael, NL-5000AM Tilburg (NL); VAN GENEN, Wesley, NL-5000AM Tilburg (NL)
(74) Representative: Plevier, Gabriël Anton Johan Maria
(86) International application number: PCT/EP2013/077986
(87) International publication number: WO 2014/102278

(56) References cited:
- WO-A1-2011/031137
- JP-A- H0 694 082

## Description

The present invention relates to a drive belt for a continuously variable transmission for motor vehicles, as defined in the preamble of claim 1.

Such a drive belt is well-known and is, for instance, described in the European patent applications EP-A-0 329 206 and EP-A-0 626 526. The known drive belt is composed of a plurality of transverse segments and at least one endless or ring-shaped carrier that extends through a recess of each of the segments such that these are supported thereby. The transverse segments are neither fixed to one another nor to the carrier ring, such that they can move relative to the carrier at least in the circumferential or length direction thereof. In the drive belt, adjacent transverse segments abut one another through their respective front and back main body surfaces, which main body surfaces face, at least predominantly, in the said circumferential direction. Typically the transverse segments and the carrier ring are made of steel. The carrier ring is typically composed of a number of individual bands that are narrowly fitted one around the other.

In the design of the transverse segment three basic portions can be recognised, namely an essentially trapezoidal base portion, a head portion and a web portion provided in-between and connecting the base portion and the head portion. A width dimension of the web portion is less than a corresponding width of the base portion and the head portion, whereby the said recess, where through the carrier extends in the drive belt, is defined between the said base and head portions.

On either side of the base portion the known transverse segment is provided with a friction surface. By means of these friction surfaces the transverse segments of the drive arrive in (frictional) contact with a driving pulley and a driven pulley of the transmission such that a rotation of the driving pulley can be transferred to the driven pulley via the likewise rotating drive belt. Further, the base portion is provided with a so-called rocking edge in the form of a convexly curved part of one of its main body surfaces, which convex surface part extends width-wise from one axial side of the base portion to the other, i.e. in-between the said friction surfaces thereof. In the drive belt radially inward from, i.e. below the rocking edge, the base portion of the transverse segment is tapered, at least effectively. Together, the rocking edge and such tapered bottom side of the transverse segments, allow adjacent segments in the drive belt to mutually rotate while remaining in mutual contact at the location of the rocking edge, whereby the drive belt curves in the length direction thereof.

Finally, the known transverse segment is provided with an essentially cylindrical, possibly slightly conical, protrusion or stud on its front main body surface and a, likewise essentially cylindrical indentation or hole on its back main body surface. In the drive belt the stud of a first transverse segment is inserted in the hole of a second, adjacent transverse segment. As a result, the consecutive transverse segments in the drive belt mutually align each other in a plane that is oriented parallel with the said main body surfaces thereof, i.e. perpendicular to the said circumferential direction.

The known drive belt is operated in the transmission in a lubricated, i.e. oiled environment, both to reduce belt-internal friction losses and to cool the belt and the pulleys of the transmission. For these purposes lubrication oil is (required to be) supplied to the drive belt, which lubrication oil is thus present between the drive belt components, such as between the carrier and the transverse segments. Also in-between the said tapered bottom side of a pair of adjacent transverse segments the lubrication oil will be present during operation.

It is known that the lubrication oil is set in motion by the rotation of the drive belt during operation of the transmission. Such a displacement of lubrication oil is naturally associated with a loss of power, i.e. a loss of transmission efficiency. As a matter of principle such power loss is preferred to be minimised, for example by minimising a flow of lubrication oil to the drive belt, however, this flow can certainly not be eliminated altogether.

It is an object of the present disclosure to provide for a design of the transverse segment that allows the lubrication oil to flow more freely between such transverse segments as incorporated in the drive belt, in particular to decrease the effort involved in the displacement thereof, such that the said power loss associated therewith is decreased as well.

It is considered that by the features of the claim 1 hereinafter, a flow of lubrication oil away from the space between the bottom sides of a pair of adjacent transverse segments is facilitated. More in particular, it is considered that by the provision of one or more openings below the rocking edge in the base portion of the transverse segments in accordance with the claim 1, a flow resistance, which is experienced by the volume of lubrication oil that is expelled from in-between the bottom sides of a pair of adjacent transverse segments, when these inner parts move towards each other when the respective transverse segments mutually rotate to curve the drive belt in its length direction, is favourably minimised. In fact, the said volume of lubrication oil can in principle not be expelled in radially outward direction, because of the contact between the pair of adjacent transverse segments at the rocking edge. Therefore, a volume part of the lubrication oil that is located just radially inward from the rocking edge of the transverse segments is expelled by being displaced from the rocking edge to the opening in the base portion, whereas a volume part of the lubrication oil that is located halfway the said opening and a lowermost edge of the transverse segments can be expelled either in radially outward direction to the opening or in radially inward direction to the lowermost edge. By applying the technical measure according to the body of claim 1, it is realised that it takes more or less the same effort to expel these two volume parts of lubrication oil. This latter feature implies that the above-mentioned flow resistance is minimised, or at least is reduced relative to the known transverse segments.

From the analysis above it might occur that, at least in the optimum arrangement of the opening in the base portion of the transverse segment in the radial or height direction, a radial distance between the opening and the lowermost edge of the transverse segment should amount to 2 times a radial distance between the opening and the rocking edge. However, in defining the range of the claim 1, it has also been taken into account that the space between the bottom sides of a pair of adjacent transverse segments -and hence the amount of lubrication oil to be expelled- increases in radial inward direction. Moreover, as the base portion of the pair of adjacent transverse segments move towards each other when the drive belt increasingly curves in its length direction, also the said lowermost edges thereof increasingly move towards each other, such that a flow resistance that is associated with the lubrication oil being expelled in radially inward direction through a slit between the said lowermost edges increases as well.

It is noted that the patent publications JP H06 94082 A and WO-A-2011/031137 both disclose transverse segments with one or more openings cutting through the base portion of the transverse segment. In case of these known transverse segments, however, the openings serve to reduce the mass of the transverse segment, whether in absolute terms, or in terms of the mass of the base portion thereof relative to the mass of its head portion. A surface area that is occupied by the openings in the main body surfaces of the transverse segment determines the mass reduction relative to a similarly shaped transverse segment without such openings. These prior publications are, however, neither concerned with the presence of lubrication oil in general, with the displacement thereof in particular nor with the location of the openings relative to both the rocking edge end the lowermost edge of the transverse segment.

In a first detailed embodiment of the transverse segment according to the present invention, an optimum arrangement of two or more openings in the axial of width direction of the base portion includes an (axial) distance between the openings that likewise amounts to between 1 to 2 times the (radial) distance from the rocking edge to the openings in the base portion. Preferably, a corresponding (axial) distance is also provided between an outermost opening in the width direction and the friction surface on a respective side of the base portion.

In a second detailed embodiment of the transverse segment according to the present invention, the openings are of an essentially cylindrical shape. Preferably, such cylindrical openings are arranged such that virtual circles drawn around the openings, with the respective cylinder axes as their respective centre points and with radii equal to the distance between such centre points and the rocking edge of the transverse segment, overlap with each other. However, preferably, the overlap between the said virtual circles mutually is limited, i.e. is less than 25%, of either one the radii of the respective virtual circles. In this manner, the mechanical strength of the transverse segment and, more in particular, of the base portion thereof, is compromised only minimally, whereas the said a flow of lubrication oil away from the space between the bottom sides of a pair of adjacent transverse segments is greatly facilitated.

In a third detailed embodiment of the transverse segment according to the present invention, the number of the openings that is present in the base portion of the transverse segment is more than 1, but less than 2 times a ratio between the (axial) width and the (radial) height of the base portion thereof. With this number of the cylindrically shaped openings, the above-described arrangement thereof can be favourably achieved.

The invention will now, by way of example, be elucidated further along a drawing in which:
figure 1 provides a schematically representation of the known continuously variable transmission with two pulleys and a drive belt;
figure 2 illustrates a transverse segment of the drive belt according to figure 1, both in a front and in a side elevation thereof;
figure 3, in a side elevation of a pair of transverse segments, schematically illustrates the feature of a mutual rotation thereof;
figure 4 provides a first novel embodiment of the transverse segment in a schematic front elevation thereof;
figure 5 provides a second novel embodiment of the transverse segment in a schematic front elevation thereof; and
figure 6 provides a third novel embodiment of the transverse segment in a schematic front elevation thereof.

In the figures, identical reference numbers relate to identical or at least comparable technical features.

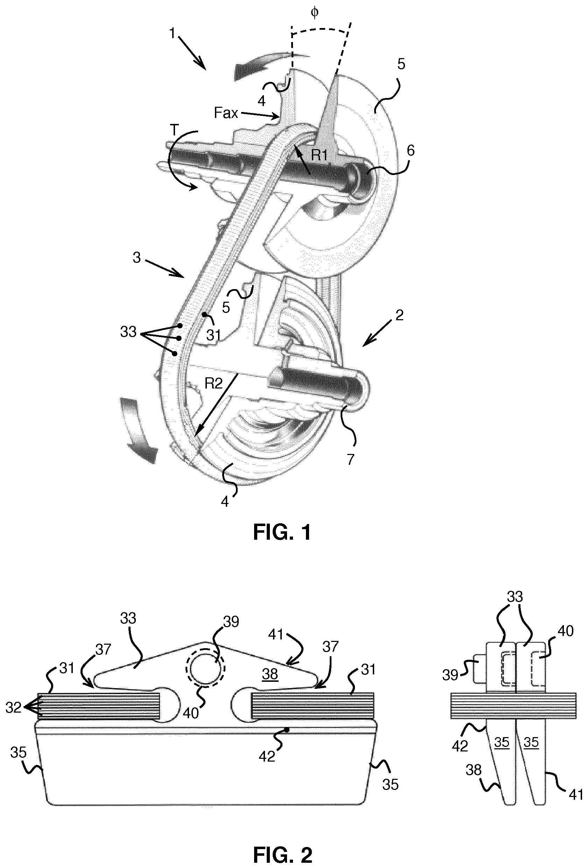

Figure 1 shows the central parts of a known continuous variable transmission, as is commonly applied in the drive line of personal vehicles between the engine and the drive wheels thereof. The transmission comprises two pulleys 1, 2, each provided with two pulley sheaves 4, 5, and a drive belt 3 that is wrapped around the said pulleys 1, 2, located clamped between the respective pulley sheaves 4, 5 thereof. The pulley sheaves 4, 5 are shaped generally conical and at least one pulley sheave 4 is incorporated in the transmission axially moveable along a respective pulley shaft 6, 7 over which it is placed. The transmission also comprises activation means that impose on the said at least one sheave 4 an axially oriented force Fax directed towards the respective other pulley sheave 5, such that the belt 3 is clamped there between and a rotational movement and accompanying torque can be transmitted between the pulleys at a variable transmission ratio.

The drive belt 3 comprises at least one endless or ring-shaped carrier 31 and a number of transverse segments 33, with the carrier ring 31 extending through an opening 37 of the transverse segments 33, such that these are moveable along the circumferential direction of the carrier ring 31.

As is shown in more detail on the left-hand side of figure 2 in a cross-section of the drive belt 3, the carrier ring 31 consists of two parts 31, each such part being composed of a number of individual bands 32 that are narrowly fitted around one another. The transverse segments 33 are basically metal plates that are facing in the circumferential direction of the carrier ring 31 and that are provided with a friction surface 35 on either axial side thereof, for frictionally engaging the pulley sheaves 4, 5. In the drive belt 3, adjacent transverse segments 33 abut one another through their respective front and rear main body surfaces 38, 41 as is shown for a pair of adjacent transverse segments 33 on the right-hand side of figure 2.

Further, the known transverse segments 33 include a stud 39 projecting from the front main body surface 38 and a hole 40 provided in the back main body surface 41. In the drive belt 3, the stud 38 of a first transverse segment 33 of a pair of adjacent transverse segments 33 is at least partly inserted in the hole of a second transverse segment 33 of such pair, whereby these transverse segments 33 mutually align each other perpendicular to the said circumferential direction.

To allow the drive belt 3 to bend, a radially inner part or bottom side of the transverse segments 33 is tapered in radially inward direction towards an innermost edge thereof, either gradually (such as illustrated on the right-hand side of figure 2), stepwise or by a combination of both. A transition edge 42 between such effectively tapered bottom side and a radially outer part or top side of the transverse segments 33 of largely constant thickness extends in the axial direction on the front main body surface 38. This so-called rocking edge 42 is typically convexly curved and defines an axis of rotation between each pair of adjacent transverse segments 33. The rocking edge 42 and the bottom side of the transverse segment 33 allow adjacent transverse segments 33 in the drive belt 3 to mutually rotate. During such mutual rotation, a respectively trailing transverse segment 33 remains in (line) contact with a respectively leading transverse segment 33 through its rocking edge 42. This design of the transverse segments 33 thus allows the drive belt 3 as a whole to curve in its length direction.

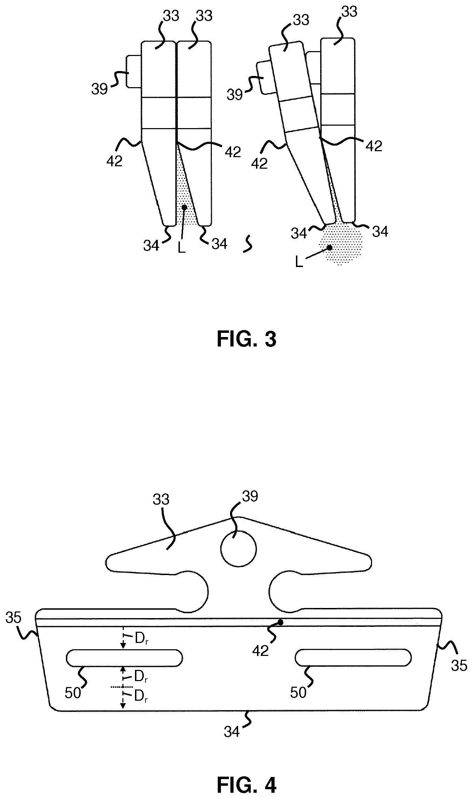

During operation, lubrication oil is circulated through the transmission to reduce friction and to cool the moving parts thereof, such as the drive belt 3. This lubrication oil accumulates (also) in the free space between the tapered radially inner part of the transverse segments 33 in a straight part of the drive belt 3, as is schematically indicated by the dotted area L in the side elevation of a pair of adjacent transverse segments 33 on the left-hand side of figure 3. When the drive belt 3 is curved around a pulley 1, 2, the adjacent transverse segments 33 rotate relative to each other, while remaining in contact through the rocking edge 42 of one of the transverse segments 33, whereby the bottom side thereof move towards each other and the said free space there between increasingly diminishes. Consequently, a flow of lubrication oil is generated from in-between the bottom side in a direction oriented away from the rocking edge 42 to beyond a lowermost edge 34 of the transverse segment 33, as is schematically illustrated on the right-hand side of figure 3.

In a first novel embodiment of the transverse segment 33, that is illustrated in figure 4 in a schematic front elevation thereof, one or more openings 50 are provided in the bottom side of the transverse segments 33 to facilitate the said flow of lubrication oil. The openings 50 are located such that a volume part of the lubrication oil that is located just radially inward from the rocking edge 42 of the transverse segment 33 is displaced in radially inward direction over a distance Dr from the rocking edge 42 to the opening 50, whereas a volume part of the lubrication oil that is located halfway the opening 50 and the lowermost edge 34 of the transverse segment 33 is displaced over a similar distance Dr, either in radially outward direction to the opening 50 or in radially inward direction to the lowermost edge 34 of the transverse segment 33. As a result, more or less the same effort will be required for expelling either one of the said volume parts of lubrication oil and the overall flow resistance is reduced.

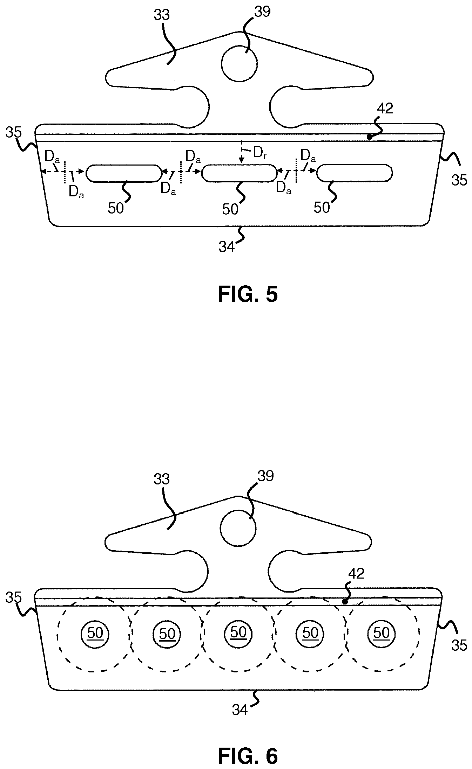

In a second novel embodiment of the transverse segment 33, that is illustrated in figure 5 in a schematic front elevation thereof, the openings 50 are mutually spaced at approximately equal intervals in the axial direction such that a volume part of the lubrication oil that is located halfway two openings 50 is displaced in the axial direction towards either opening 50 over a similar distance Da that is preferably similar to the displacement distance Dr in the radial direction. Additionally, as is also illustrated in figure 5, the outermost openings 50, as seen in the axial direction, are preferably spaced from a respective friction surface 35 by a distance that is approximately equal to the axial spacing between two consecutive openings 50.

In a third novel embodiment of the transverse segment 33, that is illustrated in figure 6 in a schematic front elevation thereof, the openings 50 are of an essentially cylindrical shape and are axially arranged with an axial spacing between two consecutive openings 50 almost double the radial spacing between the openings 50 and the rocking edge 42.

The present disclosure, in addition to the entirety of the preceding description and all details of the accompanying figures, also concerns and includes all the features of the appended set of claims. Bracketed references in the claims do not limit the scope thereof, but are merely provided as non-binding examples of the respective features. The claimed features can be applied separately in a given product or a given process, as the case may be, but it is also possible to apply any combination of two or more of such features therein.

The invention(s) represented by the present disclosure is (are) not limited to the embodiments and/or the examples that are explicitly mentioned herein, but also encompasses amendments, modifications and practical applications thereof, in particular those that lie within reach of the person skilled in the relevant art.

## Claims

1. Transverse segment (33) for a drive belt (3) with a carrier ring (31) and with a number of such transverse segments (33) that are slideably arranged on the carrier ring (31), which transverse segment (33) is provided with two friction surfaces (35), where between the transverse segment (33) extends in width direction, and with two main body surfaces (38, 41), where between the transverse segment (33) extends in thickness direction and whereof at least one main body surface (38) is provide with a rocking edge (42) that extends in width direction between the said friction surfaces (35) and that defines a transition between an upper side of the transverse segment (33) with a predominantly constant thickness and a lower side of the transverse segment (33) with a thickness decreasing from the rocking edge (42) towards a lowermost edge (34) of the transverse segment (33), which transverse segment (33) is further provided with two or more openings (50) provided in the said lower side of the transverse segment (33) piercing the full thickness thereof, **characterized in that** the openings (50) are positioned at a mutual distance that is at least equal to the distance between the openings (50) and the rocking edge (42) and that is at most equal to two times this latter distance.

2. The transverse segment (33) according to the claim 1, **characterized in that** the openings (50) are positioned at a distance from the friction surfaces (35) of the transverse element (33) that is at least equal to a distance between the openings (50) and the rocking edge (42) and that is at most equal to two times this latter distance.

3. The transverse segment (33) according to the claim 1 or 2, **characterized in that** the openings (50) are positioned at a distance from the lowermost edge (34) that is at least equal to a distance between the opening (50) or the openings (50) and the rocking edge (42) and that is at most equal to two times this latter distance.

4. The transverse segment (33) according to the claim 1, 2 or 3, **characterized in that** the number of openings (50) provided in the said lower side of the transverse segment (33) is larger than a ratio between a width and a height of the lower side of the transverse segment (33) and is smaller than to two times this ratio.

5. The transverse segment (33) according to one or more of the preceding claims, **characterized in that** the opening (50) or the openings (50) are predominantly shaped cylindrically.

6. The transverse segment (33) according to the claim 5 provided with two or more of the said openings (50), **characterized in that** two adjacent openings (50) are positioned relative to one another such that a virtual circle arranged concentrically around a respective opening (50) and touching the rocking edge (42) overlaps with a virtual circle arranged concentrically arranged concentrically around the respective other one opening (50).

7. The transverse segment (33) according to the claim 6, **characterized in that** an amount of the overlap between the said two virtual circles amounts to at most 25% of a radius of these virtual circles.

## Patentansprüche

1. Quersegment (33) für einen Antriebsriemen (3) mit einem Tragring (31) und mit einer Anzahl von derartigen Quersegmenten (33), die verschiebbar auf dem Tragring (31) angeordnet sind, wobei das Quersegment (33) mit zwei Reibflächen (35) versehen ist, zwischen denen sich das Quersegment (33) in Breitenrichtung erstreckt, und mit zwei Hauptkörperflächen (38, 41), zwischen denen sich das Quersegment (33) in Dickenrichtung erstreckt und von denen wenigstens eine Hauptkörperfläche (38) mit einem Kipprand (42) versehen ist, der sich zwischen den Reibflächen (35) in Breitenrichtung erstreckt und der einen Übergang zwischen einer oberen Seite des Quersegments (33) mit einer vorwiegend konstanten Dicke und eine untere Seite des Quersegments (33) mit einer von dem Kipprand (42) zu einem untersten Rand (34) des Quersegments (33) abnehmenden Dicke definiert, wobei das Quersegment (33) ferner mit zwei oder mehreren Öffnungen (50) versehen ist, die in der unteren Seite des Quersegments (33) vorgesehen sind und durch die volle Dicke derselben dringen, **dadurch gekennzeichnet, dass** die Öffnungen (50) in einem gegenseitigen Abstand positioniert sind, der wenigstens gleich dem Abstand zwischen den Öffnungen (50) und dem Kipprand (42) ist und der höchstens zwei Mal so groß ist wie dieser letztere Abstand.

2. Quersegment (33) nach Anspruch 1, **dadurch gekennzeichnet, dass** die Öffnungen (50) in einem Abstand zu den Reibflächen (35) des Quersegments (33) positioniert sind, der wenigstens gleich einem Abstand zwischen den Öffnungen (50) und dem Kipprand (42) ist und der höchstens zwei Mal so groß ist wie dieser letztere Abstand.

3. Quersegment (33) nach Anspruch 1 oder 2, **dadurch gekennzeichnet, dass** die Öffnungen (50) in einem Abstand zu dem untersten Rand (34) positioniert sind, der wenigstens gleich einem Abstand zwischen der Öffnung (50) oder den Öffnungen (50) und dem Kipprand (42) ist und der höchstens zwei Mal so groß ist wie dieser letztere Abstand.

4. Quersegment (33) nach Anspruch 1, 2 oder 3, **dadurch gekennzeichnet, dass** die Anzahl von Öffnungen (50), die in der unteren Seite des Quersegments (33) vorgesehen sind, größer als ein Verhältnis zwischen einer Breite und einer Höhe der unteren Seite des Quersegments (33) ist und kleiner als zwei Mal so groß ist wie dieses Verhältnis.

5. Quersegment (33) nach einem oder mehreren der vorhergehenden Ansprüche, **dadurch gekennzeichnet, dass** die Öffnung (50) oder die Öffnungen (50) vorwiegend zylindrisch geformt sind.

6. Quersegment (33) nach Anspruch 5, versehen mit zwei oder mehreren der Öffnungen (50), **dadurch gekennzeichnet, dass** zwei benachbarte Öffnungen (50) auf eine solche Weise relativ zueinander positioniert sind, dass sich ein gedachter Kreis, der konzentrisch um eine jeweilige Öffnung (50) angeordnet ist und den Kipprand (42) berührt, mit einem gedachten Kreis überschneidet, der konzentrisch um die jeweilige andere Öffnung (50) angeordnet ist.

7. Quersegment (33) nach Anspruch 6, **dadurch gekennzeichnet, dass** ein Betrag der Überschneidung zwischen den zwei gedachten Kreisen höchstens 25% eines Radius dieser gedachten Kreise beträgt.

## Revendications

1. Segment transversal (33) pour une courroie d'entraînement (3) avec un anneau de support (31) et avec un nombre de ces segments transversaux (33) qui sont agencés de manière coulissante sur l'anneau de support (31), lequel segment transversal (33) est muni de deux surfaces de friction (35), entre lesquelles le segment transversal (33) s'étend dans le sens de la largeur, et de deux surfaces de corps principales (38, 41), entre lesquelles le segment transversal (33) s'étend dans le sens de l'épaisseur, et dont au moins une surface de corps principale (38) est munie d'un bord basculant (42) qui s'étend dans le sens de la largeur entre lesdites surfaces de friction (35) et qui définit une transition entre un côté supérieur du segment transversal (33) d'une épaisseur substantiellement constante et un côté inférieur du segment transversal (33) d'une épaisseur diminuant du bord basculant (42) en direction d'un bord le plus bas (34) du segment transversal (33), lequel segment transversal (33) est en outre muni de deux orifices (50) ou plus prévus dans ledit côté inférieur du segment transversal (33) perçant toute l'épaisseur de celui-ci, **caractérisé en ce que** les orifices (50) sont positionnés à une distance mutuelle qui est au moins égale à la distance entre les orifices (50) et le bord basculant (42) et qui est au plus égale à deux fois cette dernière distance.

2. Segment transversal (33) selon la revendication 1, **caractérisé en ce que** les orifices (50) sont positionnés à une distance des surfaces de friction (35) de l'élément transversal (33) qui est au moins égale à une distance entre les orifices (50) et le bord basculant (42) et qui est au moins égale à deux fois cette dernière distance.

3. Segment transversal (33) selon la revendication 1 ou 2, **caractérisé en ce que** les orifices (50) sont positionnés à une distance du bord le plus bas (34) qui est au moins égale à une distance entre l'orifice (50) ou les orifices (50) et le bord basculant (42) et qui est au plus égale à deux fois cette dernière distance.

4. Segment transversal (33) selon la revendication 1, 2 ou 3, **caractérisé en ce que** le nombre d'orifices (50) prévus dans ledit côté inférieur du segment transversal (33) est supérieur à un rapport entre une largeur et une hauteur du côté inférieur du segment transversal (33) et est inférieur à deux fois ce rapport.

5. Segment transversal (33) selon l'une quelconque des revendications précédentes, **caractérisé en ce que** l'orifice (50) ou les orifices (50) sont substantiellement de forme cylindrique.

6. Segment transversal (33) selon la revendication 5, muni de deux desdits orifices (50) ou plus, **caractérisé en ce que** deux orifices adjacents (50) sont positionnés l'un par rapport à l'autre de telle sorte qu'un cercle virtuel agencé de manière concentrique autour d'un orifice respectif (50) et touchant le bord basculant (42) recouvre un cercle virtuel agencé de manière concentrique autour de l'autre orifice respectif (50).

7. Segment transversal (33) selon la revendication 6, **caractérisé en ce qu'**un degré de recouvrement entre lesdits deux cercles virtuels s'élève au plus à 25 % d'un rayon de ces cercles virtuels.
